# EUROPEAN PATENT SPECIFICATION

(11) **EP 3 574 022 B1**
(45) Date of publication and mention of the grant of the patent: **16.12.2020**
(21) Application number: 18701484.0
(22) Date of filing: 25.01.2018
(51) Int. Cl.: C08B 37/08

(54) **HYALURONIC ACID CROSS-LINKED WITH NATURAL OR SEMI-SYNTHETIC CROSSLINKING AGENTS**
MIT NATZÜRLICHEN ODER SEMISYNTHETISCHEN VERNETZERN VERNETZTE HYALURONSÄURE
ACIDE HYALURONIQUE RETICULE AVEC DES AGENTS DE RETICULATION NATURELS OU SEMI-SYNTHETIQUES

(30) Priority: 26.01.2017 IT 201700008651
(43) Date of publication of application: 04.12.2019
(73) Proprietor: Beauty System Pharma S.R.L., 35131 Padova PD (IT)
(72) Inventor: CHIMENTI, Massimo, 35131 Padova PD (IT)
(74) Representative: Perani & Partners S.p.A.
(86) International application number: PCT/EP2018/051883
(87) International publication number: WO 2018/138221

(56) References cited:
- EP-A2- 0 265 116
- WO-A1-2010/056113

## Description

### FIELD OF INVENTION

The following invention relates to hyaluronic acid crosslinked with natural and semi-synthetic crosslinking agents, preparation process thereof, and use thereof as medicament and in aesthetic medicine.

### STATE OF THE ART

Hyaluronic acid is a linear polymer of polysaccharide type composed of alternating repetitive units of β-D-glucuronic acid and β-D-N-acetylglucosamine and it is a component present in many animal tissues. For example, it is contained in the connective tissue of mammals, in the condyloma, in the Streptococcus involucrum.

Hyaluronic acid, being one of the components of animal tissue, is therefore one of the safest, most innocuous substances with a small sensitising impact.

There are currently two different paths for industrially preparing hyaluronic acid, the first is essentially a method for extracting from animal tissues such as condyloma, cattle eyeballs, while the second provides for a bacteria fermentation process. Nevertheless, hyaluronic acid, obtained with these processes, contains high quantities of impurities such as proteins and in particular those of endotoxin nature. Such a problem takes on extreme importance, for example in the case of intracutaneous filler compositions, i.e. the so-called fillers, since the lower the bacterial endotoxin concentration in the finished injectable product, the lower the risk of the onset of irritating-immunological reactions in the skin tissue of the receiver. Such reactions can give rise to inflammatory reactions of granuloma type of considerable severity, so much so that the European Community had to set an endotoxin threshold of less than 0.5 EU/ml for such types of products in the technical regulations.(Directive 2007/47/EC 93/42 and 93/42/EEC Medical Device class III)

Many processes are known in the art which have as main object the reduction of protein, but which however allow arriving at purity limits well below the aforesaid European standards.

For example, in US 3,396,081, a method is described for purifying the hyarulonic acid from proteins, antigens and pyrogens, which comprises the obtainment of a raw material in powder form, containing hyaluronic acid, from animal organs, the next step provides for the formation of a suspension of such powder in aqueous alkaline solution and the related heating so as to obtain the denaturing of the proteins. Finally, the protein thus denatured, by means of proteolytic enzymes, is decomposed to the corresponding amino acids, which are removed by ion exchange resins.

US4141973 provides for a deproteinisation step of the hyaluronic acid by means of treatment with chloroform. With this process, one obtains hyaluronic acid with a quantity of residual proteins equal to 0.5%.

In WO86/06728, a method is described for deproteinising hyaluronic acid, which comprises the precipitation of the hyaluronic acid and the protein from aqueous protein solution, the subsequent denaturing with alcohol, the dissolution of the hyaluronic acid and the protein in a solvent in which the hyaluronic acid is soluble and the protein is digested. Hyaluronic acid is also obtained with this method, with a residue protein content of 0.5%.

A slight improvement in the elimination of the proteins from hyaluronic acid is attained with the process described in EP239995 which provides for the following stages: hyaluronic acid is separated from a raw material by means of precipitation, then the nucleotide breakdown is carried out by adding DNase and RNase, and it is left under incubation until the nucleotide is completely digested, then it is deproteinised with 1% protease left to incubate until the protein is completely digested.

After undergoing nucleotide breakdown and deproteinisation, the hyaluronic acid is then washed with a quaternary ammonium salt of alkyl or aryl type by means of the formation of the relative complex, one proceeds with the decomplexing of hyaluronic acid by the addition of an excess of sodium dodecyl sulphate and hyaluronic acid is made to precipitate.

The hyaluronic acid thus obtained has a residual quantity of protein in the range of 0.2 -0.3%.

Another problem prevalent in the obtainment of reabsorbable implants based on hyaluronic acid, is the capacity of the same to absorb water, a very important property above all in the field of so-called fillers, or of intracutaneous formulations capable of minimising wrinkles.

Indeed, the greater the water absorption capacity, the greater its capacity to increase its own volume in contact with the bodily fluids, and the greater its capacity to fill the skin grooves caused by wrinkles or by other skin blemishes.

On the other hand, it is known that it is possible to increase the absorption capacity of the water, chemically transforming the hyaluronic acid so to make it more prone to absorb water, for example by means of cross-linking of the hyaluronic acid. This reaction allows to obtain a crosslinked hyaluronic acid being more viscoelastic and less prone to be attacked buy macrophages.

WO 86/00079, US 5,827937 and WO02/06350 describe cross-linking process of hyaluronic acid conducted at 40-50°C in acidic and/or basic solution with a cross-linking agent such as butanediol diglycidyl ether (BDDE) and subsequent neutralisation of the reaction mixture.

These cross-linking processes have a series of disadvantages, mainly caused by the fact that the rather high temperature of cross-linking can cause the breaking and degradation of the hyaluronic acid, to the detriment of the final product properties.

In addition, it is not possible with the process of the prior art to modulate the degree of cross-linking, so that one can obtain a product with the same process type with a low degree of cross-linking or with an overly high degree of cross-linking.

In CN1259363, a hyaluronic acid is described with a water absorption capacity of 350 - 650 times obtained with a method which comprising the following steps
(1) Deproteinisation treatment with an unspecified proteinising agent,
(2) Cross-linking reaction at room temperature with glycidyl ethers.

Regarding step (1), from the information contained in the Chinese patent, it is not possible to understand which is the deproteinising agent actually employed, in addition, still regarding that concerning step (1), no other quantity data is provided about the final purity of the product which underwent deproteinising. In addition, the final cross-linked product results polluted by the aforesaid cross-linking agents, which inevitably remain incorporated in the final product and which are difficult to remove.

To overcome the abovementioned drawbacks, the Italian patent application MI2008A002015 discloses a process for obtaining a hyaluronic acid crosslinked with BDDE with a much lower endotoxin content than those of the known art, due to the fact that the hyaluronic acid is subjected to two deproteinizations: the first deproteinization consists in treating an aqueous solution of hyaluronic acid with an alkyl halide, while the second deproteinization consists in treating the aqueous solution from the first deproteinization with a biologically acceptable divalent metal sulfate.

Although this process is an improvement over the previous ones, it require carrying out the crosslinking with a crosslinking agent such as fully synthetic butanediol diglycidyl ether (BDDE).

This kind of reagent, precisely because it is fully synthetic in origin, can results in side-effects in the long run, especially if the hyaluronic acid is employed very frequently as filler in aesthetic medicine.

Therefore, the need is felt to have a crosslinked hyaluronic acid, which in addition to containing very low concentrations of endotoxins, is obtained from natural or at most semi-synthetic substances.

### SUMMARY OF THE INVENTION

The Applicant has now found a hyaluronic acid, or a pharmaceutically acceptable salt thereof, crosslinked by employing panthenol as crosslinking agent.

A subject of the present invention is therefore the aforesaid crosslinked acid and the use thereof as a medicament and in aesthetic medicine.

A further subject of the present invention is the process of preparing the crosslinked hyaluronic acid of the present invention, which comprises the crosslinking of an aqueous dispersion of a pharmaceutically acceptable salt of hyaluronic acid with panthenol dissolved in a hydro alcoholic solution.

### DETAILED DESCRIPTION OF THE INVENTION

For the purposes of the present invention, by "natural substance" is meant a substance that is found in nature, which is extracted from natural substances.

For the purposes of the present invention, by "semi-synthetic substance" is meant a natural substance or a substance extracted from naturally occurring materials, which has been transformed to another substance by means of one or more organic reactions.

Panthenol, and specifically the corresponding optically active form dexpanthenol, belongs to the latter class.

Panthenol, also known as pantothenol, is characterized by the following formula

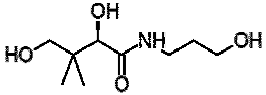

This compound, having terminal hydroxyl groups, is able to react to form ester groups with two carboxy groups belonging to two different hyaluronic acid molecules, consequently forming a crosslinking that is able to ensure the stability of the product and the correct osmolality.

Preferably, the optically active form dexpanthenol is employed as a crosslinking agent.

Panthenol is the alcohol known as pro-vitamin B5, obtained by the reduction of pantothenic acid, otherwise known as vitamin B5, the latter being a very important component of coenzyme A, a key molecule in transporting acyl and acetyl groups in the biosynthesis processes of various macromolecules, in particular fatty acids and steroid hormones. From the dermatological viewpoint, this vitamin has achieved special importance as an emollient, moisturizing, anti-inflammatory, and as skin fibroblast proliferation-inducing agent.

For this reason, it is used very much in mesotherapy (or biorevitalization) - a process which is based on subcutaneous delivery in a designated area, by a special syringe (gun-syringe), of specific products such as vitamins, herbal extracts, nutrients, homeopathic drugs, etc.

Chemically speaking, panthenol, and specifically the optically active form dexpanthenol, is the reduced alcoholic form of pantothenic acid (vitamin B5) and, compared to the latter, is more stable and is usually used in the cosmetic field. Panthenol is water-soluble and possesses physio-chemical characteristics that favour its activity as a moisturizing agent and emollient (especially if associated with glycerol). Moreover, due to its ability to enhance the skin barrier, it increases its own anti-inflammatory, anti-itching, and soothing action. It is added in many cosmetic preparations with the aim to alleviate the irritating effect of fragrances, preservatives, surfactants, and side effects of retinoid therapy. Biochemically speaking, it promotes the lipid synthesis, re-epithelialization (wound healing), and skin fibroblast proliferation. It is an ingredient that finds application in many dermo-cosmetic products, such as those intended for dry or irritated skin, for treating and hygienising skin and hair (e.g. to alleviate erythema and dermatitis caused by long exposures to ultraviolet rays). Indeed, with its moisturizing properties, panthenol increases the stratum corneum hydration and confers the right extent of moisture to the hair, preventing hair fragility and making easier hair combing. The topical application in the formulations can reduce the negative effects of kinaesthetic irritation, such as burns, bites, itching, and tingling.

The hyaluronic acid crosslinked with panthenol, specifically dexpanthenol, according to the present invention is preferably associated with natural and/or semi-synthetic polysaccharide derivatives.

According to a particularly preferred embodiment, the crosslinked hyaluronic acid according to the present invention is associated with agarose and hydroxypropyl methylcellulose.

This product shows a remarkable water-absorbing ability, expressed in terms of osmolality. Indeed, the average osmolality is 280-300 milliosmoles/kg water Agarose, characterized by the following formula: 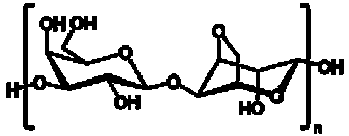 is a polysaccharide purified from agar-agar, a gelatinous substance, in turn isolated from algae. It is a linear, neutral polymer formed by D-galactose and 3,6-anhydro-L-galactose units linked alternately with glycosidic bonds. Agarose is a sugar soluble in boiling water, while becoming solid as it cools, forming a gel due to the formation of a three-dimensional matrix formed by hydrogen bonding between the linear chains.

Agarose gel is widely used in the cosmetic field and for electrophoresis separation of DNA fragments.

Highly purified agarose, showing not protein fractions anymore and being a food source for most bacteria, is highly biocompatible. Agarose creates stable, thus mouldable gels, even in small quantities (for example 1% agarose and 99% salt water).

Hydroxypropylmethylcellulose, better known as hypromellose or with the acronym HPMC, is a semisynthetic, inert, viscoelastic polymer used in eye drops as well as an excipient that enables the controlled release of active agents for oral use, but it is also found in a wide variety of commercial products.

It has the following chemical formula

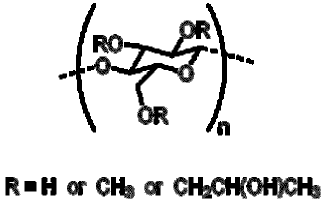

As a food additive, hypromellose is used as emulsifier, thickener, suspending agent, and is a viable alternative to animal gelatin. It is classified under Alimentarius Code as E464.

HPMC is capable of forming colloids when dissolved in water. Unlike methylcellulose, hypromellose in water solution shows thermal gelation properties. In other words, when the solution is heated up to a critical temperature, the solution congeals in a non-flowing, but semi-flexible mass. Preferably, the crosslinked hyaluronic acid of the present invention has an endotoxin content lower than 0.05EU/ml, preferably ≤0.025 EU/ml.

The hyaluronic acid crosslinked with panthenol according to the present invention, preferably in combination with agarose and hydroxypropyl methylcellulose, and even more preferably with a low endotoxin content, can be used both in therapy as a medicament and in aesthetic medicine.

When used in therapy, it is preferably employed for the treatment of joint disorders, such as skin wound-healing agent, or for ophthalmic use as an eye lubricant.

A further subject of the present invention are therefore intra-articular injectable pharmaceutical formulations containing the crosslinked hyaluronic acid with panthenol, preferably associated with agarose and hydroxypropyl methylcellulose, even more preferably with a low endotoxin content, in combination with suitable diluents and/or excipients.

A further subject of the present inventions are topical ocular formulations comprising the hyaluronic acid crosslinked with panthenol, preferably associated with agarose and hydroxypropyl methylcellulose, even more preferably with a low endotoxin content, in combination with suitable diluents and/or excipients.

A further subject of the present invention are topical pharmaceutical formulations for external use comprising the hyaluronic acid crosslinked with panthenol, preferably associated with agarose and hydroxypropyl methylcellulose, even more preferably with a low endotoxin content, in combination with suitable diluents and/or excipients.

When the hyaluronic acid crosslinked with panthenol, preferably in combination with agarose and hydroxypropyl methylcellulose, and possibly with low endotoxin content is used in aesthetic medicine, preferably it is used as a filler or filling agent for the skin imperfections and in particular for treating wrinkles and skin depressions.

A further subject of the present invention is therefore intradermally injectable formulations comprising hyaluronic acid crosslinked with panthenol, preferably associated with agarose and hydroxypropyl methylcellulose, even more preferably with a low endotoxin content, in combination with suitable diluents and/or excipients.

When the process of the present invention is used to prepare the hyaluronic acid crosslinked with panthenol, in combination with agarose and hydroxypropyl methylcellulose, a pharmaceutically acceptable salt of hyaluronic acid, in particular the sodium salt, agarose and hydroxypropyl methylcellulose are added to the aqueous dispersion before crosslinking.

The hyaluronic acid sodium salt in aqueous dispersion employed in the addition of agarose and hydroxypropyl methylcellulose, and in the subsequent crosslinking, preferably has a hyaluronic acid concentration of between 2.5 and 3.0% by weight.

In this case, the process of the present invention provides that the panthenol, in the crosslinking step, is added with respect to the aqueous solution of hyaluronic acid salt, preferably in weight ratios of dry panthenol weight/weight of said aqueous dispersion comprised between: 1: 5 and 3:5 at a temperature comprised between 50 and 70°C. When aqueous dispersions, in which the hyaluronic acid sodium salt has the aforesaid weight concentration range (2.5-3.0%), are used, agarose is added in powder form in weight ratios with respect to the weight of said aqueous dispersion of hyaluronic acid salt comprised between 0.5:5 and 2: 5 and hydroxypropyl methyl cellulose is added as a powder in weight ratio based on the weight of said aqueous dispersion comprised between 1: 5 to 2.5: 5. The process of the present invention preferably includes, after the recovery of crosslinked hyaluronic acid, a dialysis purification.

When the crosslinked hyaluronic acid of the present invention, optionally combined with agarose and hydroxypropyl methylcellulose, has a low endotoxin content, the process of the present invention, before the possible addition to the aqueous dispersion of sodium hyaluronate of agarose and hydroxypropyl methylcellulose and the subsequent crosslinking of hyaluronic acid, may comprise the following steps:
a) a first deproteinization consisting in treating an aqueous solution of hyaluronic acid with an alkyl halide, preferably chloroform,
b) a second deproteinization consisting in treating an aqueous solution of hyaluronic acid isolated from step (a) with a biologically acceptable divalent metal sulfate, preferably zinc sulfate.

In the process according to the present invention, the hyaluronic acid employed in the form of pharmaceutically acceptable salt, preferably the sodium salt, generally has an average molecular weight of between 500000 and 2000000 Da, and preferably between 1000000 and 1500000 Da.

In the following examples, the preparation process of crosslinked hyaluronic acid in association with panthenol, agarose, and hydroxypropyl methylcellulose, and with low endotoxins content, is provided for illustrative but not limitative purposes.

### Example 1

### Deproteinisation (STEP 1)

after isolation and characterisation, 20 g of hyaluronic acid are hydrated in demineralised water and buffered to pH 7.0 with a phosphate buffer solution in a planetary stirrer at a temperature of 40°C in such a manner to obtain a 0.25% w/w sodium hyaluronate solution (20 g of hyaluronic acid in 7.98 Kg of demineralised and buffered water). The gel thus obtained is transferred to another stainless-steel mixer, previously sterilised and dried and holding a volume equivalent to 0.6 g of chloroform (Sigma-Aldrich) equivalent to 3% w/w hyaluronic acid. The reaction mixture is stirred vigorously (mechanical stirring with central rod) for at least 30 minutes and preferably for 60 minutes and subsequently the reaction mixture is filtered in such a manner to separate the precipitate from the mother liquors. The precipitate is washed with 95% ethanol for 3 consecutive times with a vacuum pump and subsequently dried in a ventilated oven at 30°C until weight constancy is achieved.

### Deproteinisation (STEP 2)

The sodium hyaluronate solution obtained by rehydrating the sodium hyaluronate (15 g) obtained after deproteinisation using chloroform (STEP 1) according to the process described in STEP 1 (0.25% w/w solution) is stirred mechanically in a planetary mixer made of stainless steel and 4.5 g of an aqueous solution of zinc 10% w/w sulphate heptahydrate (Sigma Aldrich) is added to the solution. The mixture is stirred for at least 30 minutes and preferably for 60 minutes and subsequently a 95% ethanol and chloroform mixture (mixture 1:1) is added to the solution/gel and the mixture is filtered. The precipitate obtained and collected on the filter is washed with 95% ethanol for 3 consecutive times and lastly filtered with vacuum pump. The precipitate thus washed is then dried in a ventilated oven at 30°C until weight constancy is achieved.

### Example 2-cross-linking the deproteinised product obtained in example 1.

The hyaluronic acid obtained after deproteinisation (STEP 1 and 2) is hydrated in a planetary mechanical mixer at the temperature of 40°C with water demineralised and buffered by means of a phosphate buffer in such a manner to obtain a 0.25% w/w gel. 6.7 Kg of gel (0.25% w/w in sodium hyaluronate) are placed in another mechanical stirrer with a central rod and subjected to vigorous mechanical stirring; after acidification with a 1 M HCl solution up to bringing the pH to 3.5, 1 g of panthenol is added to the gel and the mixture is stirred for at least 1 and a half hours heating the mixture in a water bath at 70°C.

At the end of the reaction, the reaction mixture is neutralised with a solution of 1 M Sodium Hydroxide and subsequently extracted with a 95% ethanol and chloroform mixture at a ratio of 1:1 (2 Litres in all).

The precipitate is collected for filtering and washing using 95% ethanol for 3 consecutive times and it is subsequently filtered under vacuum and dried in a ventilated oven at 30°C until weight constancy is achieved. The hyaluronic acid powder is hydrated in a phosphate buffer in such a manner to obtain a 0.25% w/w solution and 6.8<pH<7.2 and the solution thus obtained is subjected to a dynamic dialysis process.

The last operation consists of dimensional characterisation of Sodium hyaluronate through a filtering membrane with decreasing sensitivity to extrusion.

### EXAMPLE 3 - Preparation of an aqueous dispersion containing sodium hyaluronate, agarose, and hydroxypropyl methylcellulose.

To the precipitate obtained in the previous step, water for injection is added, so as to obtain an aqueous dispersion containing 2.5% by weight of sodium hyaluronate.

5 parts by weight of said aqueous dispersion are taken and added with 1 part by weight of hydroxypropyl methylcellulose powder, stirring vigorously the mixture for 30 minutes, then adding 1.6 weight parts of agarose powder, and stirring the whole vigorously for 30 minutes.

### EXAMPLE 4 - Preparation of hyaluronic acid cross linked with panthenol

To the mixture obtained in Example 3, 40 parts by weight of a 70% ethanol aqueous solution containing 2.5 weight parts of dexpanthenol are added, bringing the temperature to 60°C under stirring and allowing to react for 30 minutes. The product so obtained from the reactor is subjected to dialysis directly.

This type of product is particularly suitable for injectable formulations that can be administered intra-articular.

The hyaluronic acid crosslinked with panthenol suitable for formulations in aesthetic medicine is prepared with processes similar to those described in the Examples 1-4, with the only difference being that in Example 4 an aqueous ethanol solution containing 2 g of panthenol is added.

The hyaluronic acid crosslinked with panthenol suitable for topical formulations for healing wounds and in the ophthalmic field is prepared with processes similar to those described in Examples 1-4, with the only difference being that in Example 4 an aqueous ethanol solution containing 1.6 g of panthenol is added.

## Claims

1. Crosslinked hyaluronic acid, or a pharmaceutically acceptable salt thereof, preferably the hyaluronate sodium salt, wherein the crosslinking agent is panthenol, or the optically active form thereof dexpanthenol.

2. Crosslinked hyaluronic acid according to claim 1 in association with agarose and/or hydroxypropylmethylcellulose.

3. Crosslinked hyaluronic acid, according to claim 1 or 2, having and endotoxin content lower than 0.05EU/ml preferably ≤0.025 EU/ml.

4. Crosslinked hyaluronic acid according to any one of claims 1 -3, for use as a medicament.

5. Crosslinked hyaluronic acid for the use according to claim 4, for the treatment of joint disorders.

6. Crosslinked hyaluronic acid for the use according to claim 4, as healing agent of skin wounds.

7. Crosslinked hyaluronic acid for the use according to claim 4, as ocular lubricating agent.

8. Crosslinked hyaluronic acid for the use according to claim 4, in aesthetic medicine.

9. Crosslinked hyaluronic acid for the use according to claim 8, as a filler for wrinkles treatment.

10. Intradermal injectable formulations containing crosslinked hyaluronic acid according to anyone of claims 1-3, in combination with suitable excipients and/or diluents.

11. Pharmaceutical topical, dermal formulations comprising crosslinked hyaluronic acid according to anyone of claims 1-3 in combination with suitable excipients and/or diluents.

12. Pharmaceutical topical ocular formulations comprising crosslinked hyaluronic acid according to anyone of claims 1-3 in combination with suitable excipients and/or diluents.

13. Pharmaceutical topical intra-articular injectable formulations comprising crosslinked hyaluronic acid according to anyone of claims 1-3 in combination with suitable excipients and/or diluents.

14. Process for preparing crosslinked hyaluronic acid according to anyone of claims 1-3, comprising reacting an aqueous dispersion of a pharmaceutically acceptable salt thereof, preferably the hyaluronate sodium salt with panthenol, preferably dexpanthenol, dissolved in a hydroalcoholic solution, preferably aqueous ethanol.

15. Process according to claim 14, wherein before said crosslinking reaction agarose and/or hydroxypropylmethylcellulose are added to said aqueous dispersion of a hyaluronic acid salt, preferably the sodium salt thereof.

16. Process according to any one of claims 14-15, wherein the concentration of said hyaluronic acid salt in said aqueous dispersion is comprised between 2.5 and 3.0% by weight.

17. Process according to any one of claims 14-16, comprising the following steps before the crosslinking reaction:
a) a first deproteinization consisting of treating an aqueous solution of hylauronic acid or a salt thereof, preferably the sodium salt, with an alkylhalide, preferably chloroform,
b) a second deproteinization consisting of treating an aqueous solution of the hyaluronic acid od salt thereof separated from the reaction mixture of step (a) with a sulfate of a bivalent biologically acceptable salt thereof.

18. Process according to any of claims 16 and 17, wherein panthenol is added with respect to the said aqueous dispersion of hyaluronic acid salt in weight ratio of dry panthenol weight /aqueous dispersion weight of hyaluronic acid salt comprised between 1 : 5 and 3 : 5 at a temperature comprised between 50 and 70°C.

19. Process according to any one of claims 16-18, wherein agarose is added as a powder in weight ratio with respect to the weight of said aqueous dispersion of hyaluronic acid salt comprised between 0,5:5 and 2:5 and hydroxypropyl methyl cellulose is added as a powder in weight ratio based on the weight of said aqueous dispersion comprised between 1: 5 e 2,5 : 5.

## Patentansprüche

1. Vernetzte Hyaluronsäure oder ein pharmazeutisch akzeptables Salz davon, vorzugsweise das Natriumhyaluronat, wobei das Vernetzungsmittel Panthenol oder die optisch aktive Form davon Dexpanthenol ist.

2. Vernetzte Hyaluronsäure nach Anspruch 1 in Verbindung mit Agarose und/oder Hydroxypropylmethylcellulose.

3. Vernetzte Hyaluronsäure nach Anspruch 1 oder 2 mit einem Endotoxingehalt von weniger als 0,05 EU/ml, vorzugsweise ≤0,025 EU/ml.

4. Vernetzte Hyaluronsäure nach einem der Ansprüche 1-3 zur Verwendung als Medikament.

5. Vernetzte Hyaluronsäure zur Verwendung nach Anspruch 4 zur Behandlung von Gelenkerkrankungen.

6. Vernetzte Hyaluronsäure zur Verwendung nach Anspruch 4 als Heilmittel für Hautwunden.

7. Vernetzte Hyaluronsäure zur Verwendung nach Anspruch 4 als Augenbenetzungsmittel.

8. Vernetzte Hyaluronsäure zur Verwendung nach Anspruch 4 in der ästhetischen Medizin.

9. Vernetzte Hyaluronsäure zur Verwendung nach Anspruch 8 als Füllmittel bei der Faltenbehandlung.

10. Intradermal injizierbare Zubereitungen, die vernetzte Hyaluronsäure nach einem der Ansprüche 1-3 enthalten, in Kombination mit geeigneten Exzipienten und/oder Verdünnungsmitteln.

11. Pharmazeutische topische, dermale Zubereitungen, die vernetzte Hyaluronsäure nach einem der Ansprüche 1-3 umfassen, in Kombination mit geeigneten Exzipienten und/oder Verdünnungsmitteln.

12. Pharmazeutische topische, okuläre Zubereitungen, die vernetzte Hyaluronsäure nach einem der Ansprüche 1-3 umfassen, in Kombination mit geeigneten Exzipienten und/oder Verdünnungsmitteln.

13. Pharmazeutische topische, intraartikulär injizierbare Zubereitungen, die vernetzte Hyaluronsäure nach einem der Ansprüche 1-3 umfassen, in Kombination mit geeigneten Exzipienten und/oder Verdünnungsmitteln.

14. Verfahren zur Zubereitung von vernetzter Hyaluronsäure nach einem der Ansprüche 1-3, dass das Reagieren einer wässrigen Dispersion eines pharmazeutisch akzeptablen Salzes davon, vorzugsweise des Natriumhyaluronats mit Panthenol, vorzugsweise Dexpanthenol, aufgelöst in einer hydroalkoholischen Lösung, vorzugsweise wässrigem Ethanol, umfasst.

15. Verfahren nach Anspruch 14, wobei vor der Vernetzungsreaktion Agarose und/oder Hydroxypropylmethylcellulose zur wässrigen Dispersion eines Hyaluronsäuresalzes, vorzugsweise des Natriums davon, hinzugefügt werden.

16. Verfahren nach einem der Ansprüche 14-15, wobei die Konzentration des Hyaluronsäuresalzes in der wässrigen Dispersion zwischen 2,5 und 3,0 Gew.-% umfasst ist.

17. Verfahren nach einem der Ansprüche 14-16, das vor der Vernetzungsreaktion die folgenden Schritte umfasst:
a) eine erste Deproteinisierung, die aus dem Behandeln einer wässrigen Lösung von Hyaluronsäure oder einem Salz davon, vorzugsweise dem Natriumsalz, mit einem Alkylhalid, vorzugsweise Chloroform, besteht,
b) eine zweite Deproteinisierung, die aus dem Behandeln einer wässrigen Lösung von Hyaluronsäure oder einem Salz davon, getrennt von der Reaktionsmischung von Schritt (a), mit einem Sulfat eines bivalenten biologisch akzeptablen Salzes davon besteht.

18. Verfahren nach einem der Ansprüche 16 und 17, wobei Panthenol mit Bezug auf die wässrige Dispersion von Hyaluronsäuresalz in einem Gewichtsverhältnis von Gewicht des trockenen Panthenols/Gewicht der wässrigen Dispersion von Hyaluronsäuresalz, das bei einer Temperatur, die zwischen 50 und 70 °C umfasst ist, zwischen 1:5 und 3:5 umfasst ist, hinzugefügt wird.

19. Verfahren nach einem der Ansprüche 16-18, wobei Agarose als Pulver in einem Gewichtsverhältnis mit Bezug auf das Gewicht einer wässrigen Lösung von Hyaluronsäuresalz, das zwischen 0,5:5 und 2:5 umfasst ist, hinzugefügt wird und Hydroxypropylmethylcellulose als Pulver in einem Gewichtsverhältnis auf Basis des Gewichts der wässrigen Dispersion, das zwischen 1: 5 und 2,5: 5 umfasst wird, hinzugefügt wird.

## Revendications

1. Acide hyaluronique réticulé, ou un sel pharmaceutiquement acceptable de celui-ci, de préférence le sel de sodium d'hyaluronate, où l'agent de réticulation est le panthénol, ou la forme optiquement active de celui-ci, le dexpanthénol.

2. Acide hyaluronique réticulé selon la revendication 1 en association avec l'agarose et/ou l'hydroxypropylméthylcellulose.

3. Acide hyaluronique réticulé selon la revendication 1 ou 2, ayant une teneur en endotoxine inférieure à 0,05UE/ml, de préférence ≤0,025 UE/ml.

4. Acide hyaluronique réticulé selon l'une quelconque des revendications 1 à 3, pour une utilisation comme médicament.

5. Acide hyaluronique réticulé pour l'utilisation selon la revendication 4, pour le traitement de troubles articulaires.

6. Acide hyaluronique réticulé pour l'utilisation selon la revendication 4, comme agent de cicatrisation de plaies cutanées.

7. Acide hyaluronique réticulé pour l'utilisation selon la revendication 4, comme agent lubrifiant oculaire.

8. Acide hyaluronique réticulé pour l'utilisation selon la revendication 4, en médecine esthétique.

9. Acide hyaluronique réticulé pour l'utilisation selon la revendication 8, comme une charge pour le traitement des rides.

10. Formulations injectables intradermiques contenant de l'acide hyaluronique réticulé selon l'une quelconque des revendications 1 à 3, en combinaison avec des excipients et/ou diluants appropriés.

11. Formulations topiques dermiques pharmaceutiques comprenant de l'acide hyaluronique réticulé selon l'une quelconque des revendications 1 à 3 en combinaison avec des excipients et/ou diluants appropriés.

12. Formulations oculaires topiques pharmaceutiques comprenant de l'acide hyaluronique réticulé selon l'une quelconque des revendications 1 à 3 en combinaison avec des excipients et/ou diluants appropriés.

13. Formulations injectables intraarticulaires topiques pharmaceutiques comprenant de l'acide hyaluronique réticulé selon l'une quelconque des revendications 1 à 3 en combinaison avec des excipients et/ou diluants appropriés.

14. Procédé de préparation d'acide hyaluronique réticulé selon l'une quelconque des revendications 1 à 3, comprenant la réaction d'une dispersion aqueuse d'un sel pharmaceutiquement acceptable de celui-ci, de préférence le sel de sodium d'hyaluronate avec du panthénol, de préférence du dexpanthénol, dissous dans une solution hydroalcoolique, de préférence de l'éthanol aqueux.

15. Procédé selon la revendication 14, où, avant ladite réaction de réticulation, de l'agarose et/ou de l'hydroxypropylméthylcellulose sont ajoutés à ladite dispersion aqueuse d'un sel d'acide hyaluronique, de préférence son sel de sodium.

16. Procédé selon l'une quelconque des revendications 14 à 15, où la concentration dudit sel d'acide hyaluronique dans ladite dispersion aqueuse est comprise entre 2,5 et 3,0% en poids.

17. Procédé selon l'une quelconque des revendications 14 à 16, comprenant les étapes suivantes avant la réaction de réticulation :
a) une première déprotéinisation consistant à traiter une solution aqueuse d'acide hyaluronique ou d'un sel de celui-ci, de préférence le sel de sodium, avec un halogénure d'alkyle, de préférence le chloroforme,
b) une seconde déprotéinisation consistant à traiter une solution aqueuse de l'acide hyaluronique ou de son sel séparé du mélange réactionnel de l'étape (a) avec un sulfate d'un sel biologiquement acceptable bivalent de celui-ci.

18. Procédé selon l'une quelconque des revendications 16 et 17, où le panthénol est ajouté par rapport à ladite dispersion aqueuse de sel d'acide hyaluronique dans un rapport pondéral de poids de panthénol sec/poids de dispersion aqueuse de sel d'acide hyaluronique compris entre 1: 5 et 3: 5 à une température comprise entre 50 et 70°C.

19. Procédé selon l'une quelconque des revendications 16 à 18, où l'agarose est ajouté sous la forme d'une poudre en rapport pondéral par rapport au poids de ladite dispersion aqueuse de sel d'acide hyaluronique comprise entre 0,5:5 et 2:5 et l'hydroxypropylméthylcellulose est ajoutée sous la forme d'une poudre en rapport pondéral par rapport au poids de ladite dispersion aqueuse comprise entre 1: 5 et 2,5: 5.
